# EUROPÄISCHE PATENTSCHRIFT

(11) **EP 1 346 532 B1**
(45) Veröffentlichungstag und Bekanntmachung des Hinweises auf die Patenterteilung: **24.09.2008**
(21) Anmeldenummer: 01270990.3
(22) Anmeldetag: 22.11.2001
(51) Int. Cl.: H04L 25/02

(54) **BUSSCHNITTSTELLE UND VERFAHREN ZUM ANKOPPELN EINES BUSTEILNEHMERS AN EINEN BUS**
BUS INTERFACE AND METHOD FOR COUPLING A BUS DEVICE TO A BUS
INTERFACE DE BUS ET PROCEDE POUR RACCORDER UN UTILISATEUR DE BUS A UN BUS

(30) Priorität: 13.12.2000 DE 10061945
(43) Veröffentlichungstag der Anmeldung: 24.09.2003
(73) Patentinhaber: ROBERT BOSCH GMBH, 70442 Stuttgart (DE)
(72) Erfinder: KIEFER, Hans-Friedrich, 70806 Kornwestheim (DE); FIEDLER, Mathias, 75417 Muehlacker (DE); HUEBL, Jochen, 71701 Schwieberdingen (DE)
(86) Internationale Anmeldenummer: PCT/DE2001/004407
(87) Internationale Veröffentlichungsnummer: WO 2002/049302

(56) Entgegenhaltungen:
- US-A- 6 111 431

## Beschreibung

### Technisches Gebiet

Die Erfindung bezieht sich auf eine Busschnittstelle gemäß dem Oberbegriff des Anspruchs 1 sowie auf ein Verfahren zum Ankoppeln eines Busteilnehmers an einen Bus gemäß dem Oberbegriff des Anspruchs 6.

### Stand der Technik

Busschnittstellen bzw. Ankopplungsverfahren sind' z.B. für einen Controller-Area-Network-Bus (CAN-Bus) in Kraftfahrzeugen bekannt. Ein solcher Bus weist ein Paar von Busleitungen auf, dessen eine Busleitung im Zeitverlauf einen zur anderen Busleitung jeweils komplementären Signalpegel aufweisen soll. Die Busschnittstellen dienen zur gegenphasigen Ankopplung von Busteilnehmern wie z.B. Kpmmunikationskomponenten, Systemen und/oder Subsystemen den Bus. Bekannt ist eine Busschnittstelle mit einem Paar von Treiberschaltungen, und zwar einer ersten Treiberschaltung, deren Ausgang mit der ersten Busleitung gekoppelt ist, und einer zur ersten Treiberschaltung komplementär arbeitenden zweiten Treiberschaltung, deren Ausgang mit der zweiten Busleitung gekoppelt ist. Hierbei weist jede Treiberschaltung ein Schaltelement auf, wobei das eine als p-Kanal-Transistor und das andere als n-Kanal-Transistor realisiert ist.

Bei einer solchen Busschnittstelle sind die Eingänge beider Treiberschaltungen mit dem Busteilnehmer gekoppelt. Durch ein Invertierglied an einem der beiden Eingänge wird eine gegenphasige Ansteuerung der beiden Treiberschaltungen bewirkt. Jedoch führt die so ausgestaltete gegenphasige Ansteuerung der beiden Treiberschaltungen wegen Laufzeitunterschieden, Unterschiedlichkeit der jeweils verwendeten p- bzw. n-Kanal-Transistoren und/oder Bauteiletoleranzen zu Phasenverschiebung und Asymmetrie zwischen den Ausgangssignalen der beiden Treiberschaltungen. Infolgedessen besteht die Gefahr, daß die Ausgangssignale nicht genügend präzise gegenphasig sind, was u.a. zu erhöhter hochfrequenter Abstrahlung auf den Ausgängen und den Busleitungen führt.

US 6,111,431 bezieht sich auf einen Treiberkreis zur Übermittlung eines Differenzsignales an einem äußeren Kreis. Gemäß dieser Lösung umfasst der Treiberkreis mehrere Transistoren P21, P22 und P33. Mittels eines Bauelemente R31 wird eine Beschädigung von Transistoren N21, N22 bei ausgangsseitigem Kurzschluss am Treiberkreis verhindert. Die Transistoren N11 und N 12 werden auf ähnliche Weise gegen einen auftretenden Kurzschluss am Treiberkreis geschützt. Mittels eines ersten Operationsverstärkers OPAMP 1 werden die Transistoren P21 und P22 gesteuert, während die Transistoren N11 und N12 mittels eines weiteren, zweiten Operationsverstärkers OPAMP2 gesteuert werden. Durch die Anordnung zweier Inverter IV31, IV34 sowie von NOR-Gates 31, 34 bzw. NOR-Gates 32, 33 werden die Transistoren N22 und N23 bzw. die Transistoren N21 und N24 abwechselnd ein- bzw. ausgeschaltet.

### Vorteile der Erfindung

Die erfindungsgemäße Busschnittstelle mit den Merkmalen gemäß Anspruch 1 hat demgegenüber den Vorteil, daß aufgrund der Verwendung des Ausgangssignals der ersten Treiberschaltung zur Ansteuerung der zweiten Treiberschaltung eine besser ausgeprägte Gegenphasigkeit der beiden Ausgangssignale erzielt werden kann. Der Spannungshub der Ausgangssignale kann konstant gehalten werden. Somit wird die hochfrequente Abstrahlung vermindert.

Erfindungswesentlich ist es desweiteren, zur Ansteuerung der zweiten Treiberschaltung einen Spannungsteiler zwischen den Ausgängen der Treiberschaltungen vorzusehen und die Mittenspannung abzugreifen. Die zweite Treiberschaltung kann als Regelkreis ausgestattet sein, welcher die Mittenspannung des Spannungsteilers auf einen vorbestimmten Wert, insbesondere auf die Hälfte der Versorgungsspannung ausregelt. Die zweite Treiberschaltung ist vorteilhafterweise durch einen Operationsverstärker gebildet. Bei dem Bus kann es sich, wie in Kraftfahrzeugen heute üblich, um einen CAN-Bus handeln, der insbesondere ein serieller Bus ist. Die Erfindung umfaßt auch ein Verfahren zum Ankoppeln eines Busteilnehmers an einen Bus.

Vorteilhaft ist auch die Verwendung eines Differenzverstärkers mit einem Differenzausgang, der nur bei einem Empfangssignal aktiviert wird.

### Zeichnung

Die Erfindung wird anhand eines Ausführungsbeispieles und der Zeichnung näher erläutert.

In der Zeichnung zeigt
- Fig. 1: eine erfindungsgemäße Busschnittstelle,
- Fig. 2A: ein Zeitdiagramm von Signalverläufen in einer Busschnittstelle des Standes der Technik und
- Fig. 2B: ein Zeitdiagramm von Signalverläufen in der erfindungsgemäßen Busschnittstelle.

### Ausführungsbeispiel

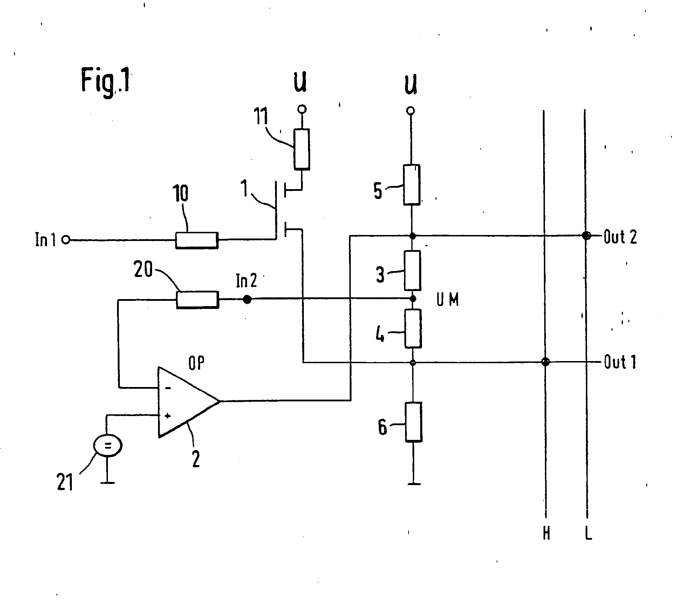

Die Busschnittstelle gemäß Fig. 1 ist dazu bestimmt, zwischen einen Busteilnehmer (nicht dargestellt) am Eingang In1 und einen Bus mit den Leitungen H, L an den Ausgängen Out1, Out2 geschaltet zu werden.

Bei dem Bus handelt es sich typischerweise um einen seriellen Controller-Area-Network-Bus, wie er in Kraftfahrzeugen eingesetzt wird. Der Bus weist zwei komplementäre Leitungen H, L auf, deren Signalpegel zueinander gegenphasig sein sollen, d.h. wenn das Signal auf der einen Busleitung niederpegelig ist, soll das Signal auf der anderen Busleitung hochpegelig sein.

Die Gegenphasigkeit der Signale auf den beiden Busleitungen H, L wird durch zwei Treiberschaltungen 1, 10, 11, 2, 20, 21 gewährleistet. Die erste Treiberschaltung 1, 10, 11 mit Schaltelement 1 und Widerständen 10, 11 ist eingangsseitig mit dem Busteilnehmer verbunden. Ist das Schaltelement 1 leitend, so ist die Ausgangsleitung Out1 hochpegelig. Sperrt das Schaltelement 1, so ist das Ausgangssignal Out1 entsprechend niederpegelig. Die zweite Treiberschaltung 2, 20, 21 ist eingangsseitig nicht mit dem Busteilnehmer gekoppelt, sondern erhält an ihrem Eingang In2 ein vom Ausgang Out1 der ersten Treiberschaltung 1, 10, 11 stammendes Signal. Das Signal wird in der Mitte eines Spannungsteilers mit den Widerständen 3, 4 abgegriffen, der zwischen die beiden Ausgänge Out1, Out2 geschaltet ist.

Über Widerstände 3, 4, 5, 6 werden die Ruhepegel an den Ausgängen eingestellt. U bezeichnet die Versorgungsspannung.

Die zweite Treiberschaltung 2, 20, 21 weist einen Operationsverstärker 2 auf, der so beschaltet ist, daß er als Regelkreis funktioniert. Der Regelkreis ist mittels Widerstand 20 am invertierenden Eingang und Spannungsquelle 21 am nicht-invertierenden Eingang derart eingestellt, daß die Mittenspannung UM den Spannungsteiler, der durch die beiden Widerstände 3, 4 gebildet wird, auf die halbe Versorgungsspannung U/2 geregelt wird. Steigt also das Ausgangssignal Out1 an, so steigt auch die Mittenspannung UM an. Diese Mittenspannung UM wird auf den invertierenden Eingang des Operationsverstärkers 20 rückgeschleift. Als Reaktion auf das Ansteigen der Eingangsspannung am invertierenden Eingang senkt der Operationsverstärker 20 den Spannungspegel am Ausgang Out2 entsprechend ab, wodurch der Pegel UM auf die halbe Versorgungsspannung U/2 gesetzt wird. Sinkt das Ausgangssignal Out1, so kehrt sich der beschriebene Mechanismus um, und das Ausgangssignal Out2 wird höherpegelig. Damit wird eine Gegenphasigkeit der beiden Ausgangssignale Out1 und Out2 zueinander erzielt.

Die Treiberschaltung 2, 20, 21 wird in Abhängigkeit des Signales am Ausgang Out 1 der ersten Treiberschaltung 1, 10, 11 gesteuert. Dadurch wird eine Asynchronität der Ausgangssignale, wie sie durch Laufzeitunterschiede und Bauteiltoleranzen in den beiden Treiberschaltungen 1, 10, 11 bzw. 2, 20, 21 verursacht wird, minimiert. Daraus resultiert eine besser ausgeprägte Gegenphasigkeit und eine geringere hochfrequente Abstrahlung beider Busleitungen H L.

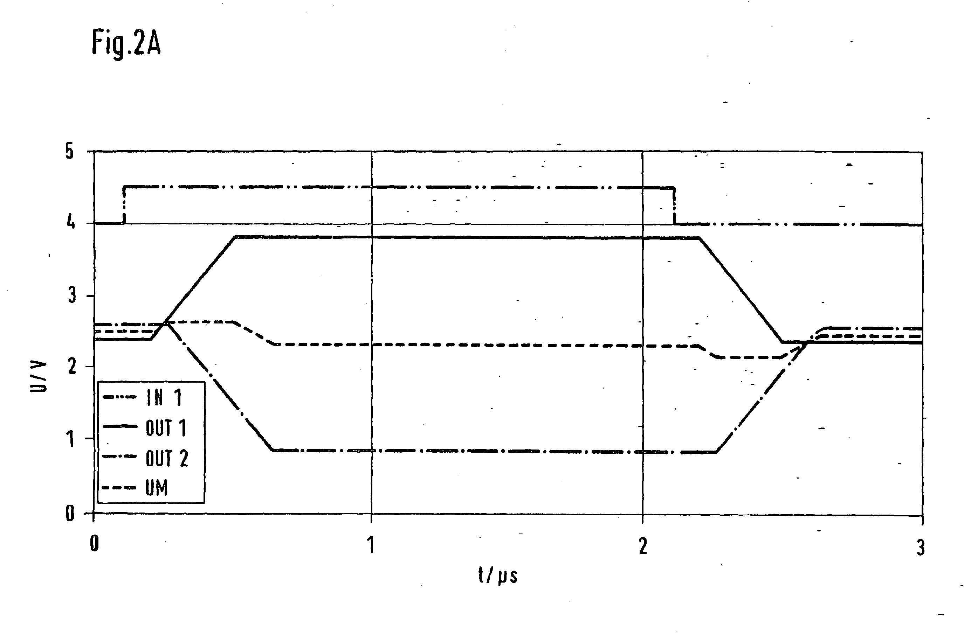

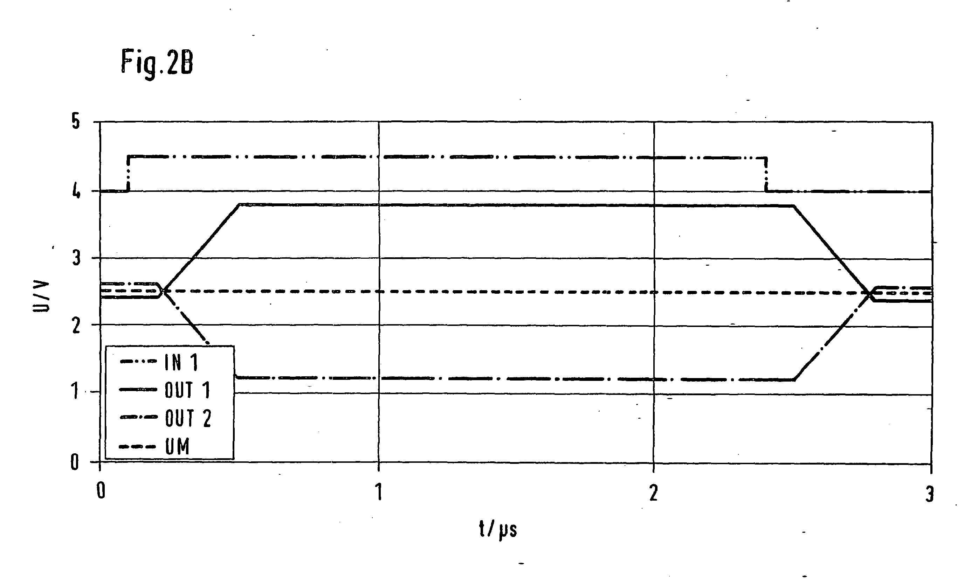

Fig. 2A, B stellen Zeitverläufe der Spannungen in einer Busschnittstelle des Standes der Technik denjenigen der erfindungsgemäßen Busschnittstelle gegenüber.

Fig. 2A zeigt ein Zeitdiagramm von Signalverläufen in einer Busschnittstelle des Standes der Technik. Deutlich sichtbar ist der zeitliche Versatz zwischen den Signalen Out1, Out2 an den jeweiligen Ausgängen der Busschnittstelle; die Mittenspannung UM weist dementsprechend hohe Spitzen auf. Ferner ist der Spannungshub der beiden Ausgangsspannungen Out 1 und Out 2 unterschiedlich groß.

Fig. 2B zeigt Zeitverläufe der beschriebenen Signale an der erfindungsgemäßen Busschnittstelle. Die als Regler ausgestaltete Treiberschaltung 2, 20, 21 regelt die Mittenspannung UM auf konstant U/2 ein, es gibt keinen zeitlichen Versatz zwischen den beiden Ausgangsspannungen Out 1 und Out2, und die beiden Ausgangsspannungen Out 1 und Out2 weisen gleichen Spannungshub auf.

Gemäß des Verfahrens zum Ankoppeln eines Busteilnehmers an einen Bus mit einem Paar komplementärer Busleitungen H,L wird der Busteilnehmer mit dem Eingang In1 einer ersten Treiberschaltung 1, 10, 11 gekoppelt und der Ausgang Out1 der ersten Treiberschaltung 1, 10, 11 mit der ersten Busleitung H des Paares komplementärer Busleitungen gekoppelt; der Ausgang Out2 der zur ersten Treiberschaltung 1, 10, 11 komplementär wirkenden zweiten Treiberschaltung 2, 20, 21 wird mit der zweiten Busleitung L des Paares komplementärer Busleitungen H,L gekoppelt, wobei der Eingang In2 der zweiten Treiberschaltung 2, 20, 21 mit dem Ausgang Out1 der ersten Treiberschaltung 1, 10, 11 derart gekoppelt wird, dass der Eingang In2 der zweiten Treiberschaltung 2, 20, 21 mit dem Ausgang Out1 der ersten Treiberschaltung 1, 10, 11 über den Mittenabgriffspunkt UM eines Spannungsteilers 3, 4 verkoppelt ist, der zwischen die beiden Ausgänge Out1, Out2 der beiden Treiberschaltungen 1, 10, 11; 2, 20, 21 geschaltet ist.

### Bezugszeichenliste

- 1: Schaltelement
- 2: Operationsverstärker
- 3: Spannungsteiler-Widerstand
- 4: Spannungsteiler-Widerstand
- 5: Widerstand
- 6: Widerstand
- 10: Widerstand
- 11: Widerstand
- 20: Widerstand
- 21: Spannungsquelle
- H, L: Busleitungen
- In 1: Eingang
- In2: Eingang
- Out1: Ausgang
- Out2: Ausgang
- UM: Mittenspannung
- U: Versorgungsspannung

## Patentansprüche

1. Busschnittstelle, insbesondere' in Kraftfahrzeugen, zum Ankoppeln eines Busteilnehmers an einen Bus mit einem Paar komplementärer Busleitungen (H, L), aufweisend:
eine erste Treiberschaltung (1, 10, 11), deren Eingang (In1) mit dem Busteilnehmer gekoppelt ist und deren Ausgang (Out1) mit der ersten Busleitung (H) des Paares komplementärer Busleitungen (H, L) gekoppelt ist, und
eine zur ersten Treiberschaltung (1, 10, 11) komplementär wirkende zweite Treiberschaltung (2, 20, 21), deren Ausgang (Out2) mit der zweiten Busleitung (L) des Paares komplementärer Busleitungen (H, L) gekoppelt ist, **dadurch gekennzeichnet, daß** der Eingang (In2) der zweiten Treiberschaltung (2, 20, 21) mit dem Ausgang (Out1) der ersten Treiberschaltung (1, 10, 11) derart gekoppelt ist, dass der Eingang (In2) der zweiten Treiberschaltung (2, 20, 21) mit dem Ausgang (Out1) der ersten Treiberschaltung (1, 10, 11) über einen Mittenabgriffspunkt (UM) eines Spannungsteilers (3, 4) verkoppelt ist, der zwischen die beiden Ausgänge (Out1, Out2) der beiden Treiberschaltungen (1, 10, 11; 2, 20, 21) geschaltet ist.

2. Busschnittstelle gemäß Anspruch 1, **dadurch gekennzeichnet, daß** die zweite Treiberschaltung (2, 20, 21) als Regler ausgestaltet ist, welcher den Mittenabgriffspunkt (UM) des Spannungsteilers (3, 4) potentialmäßig auf einen vorbestimmten Wert regelt.

3. Busschnittstelle gemäß einem der vorherigen Ansprüche, **dadurch gekennzeichnet**, die zweite Treiberschaltung (2, 20, 21) einen Operationsverstärker (2) aufweist.

4. Busschnittstelle gemäß einem der vorherigen Ansprüche, **dadurch gekennzeichnet, daß** die erste Treiberschaltung (1, 10, 11) am Eingang (In1) Signale einer Kraftfahrzeug-Kommunikationskomponente erhält.

5. Busschnittstelle gemäß einem der vorherigen Ansprüche, **dadurch gekennzeichnet, daß** der Bus ein Contoller-Area-Network-Bus ist.

6. Verfahren zum Ankoppeln eines Busteilnehmers an einen Bus mit einem Paar komplementärer Busleitungen (H, L), wobei
der Busteilnehmer mit dem Eingang (In1) einer ersten Treiberschaltung (1, 10, 11) gekoppelt wird und der Ausgang (Out1) der ersten Treiberschaltung (1, 10, 11) mit der ersten Busleitung (H) des Paares komplementärer Busleitungen (H, L) gekoppelt wird und
der Ausgang (Out2) der zur ersten Treiberschaltung' (1, 10, 11) komplementär wirkende zweite Treiberschaltung (2, 20, 21) mit der zweiten Busleitung (L) des Paares komplementärer Busleitungen (H, L) gekoppelt wird, **dadurch gekennzeichnet, daß** der Eingang (In2) der zweiten Treiberschaltung (2, 20, 21) mit dem Ausgang (Out1) der ersten Treiberschaltung (1, 10, 11) derart gekoppelt wird, daß der Eingang (In2) der zweiten Treiberschaltung (2, 20, 21) mit dem Ausgang (Out1) der ersten Treiberschaltung (1, 10, 11) über den Mittenabgriffspunkt (UM) eines Spannungsteilers (3, 4) verkoppelt ist, der zwischen die beiden Ausgänge (Out1, Out2) der beiden Treiberschaltungen (1, 10, 11; 2, 20, 21) geschaltet ist.

7. Verfahren gemäß Anspruch 6, **dadurch gekennzeichnet, daß** die zweite Treiberschaltung (2, 20, 21) als Regler (20, 21) wirkt, welcher den Mittenabgriffspunkt (UM) des Spannungsteilers (3, 4) potentialmäßig auf einen vorbestimmten Wert regelt.

8. Verfahren gemäß Anspruch 6, **dadurch gekennzeichnet**, die zweite Treiberschaltung (2, 20, 21) als Operationsverstärker wirkt.

9. Verfahren gemäß einem der Ansprüche 6 bis 8, **dadurch gekennzeichnet, daß** die erste Treiberschaltung (1, 10, 11) am Eingang (In1) Signale einer Kraftfahrzeug-Kommunikationskomponente erhält.

10. Verfahren gemäß einem der Ansprüche 6 bis 9, **dadurch gekennzeichnet, daß** der Bus ein Contoller-Area-Network-Bus ist.

## Claims

1. Bus interface, in particular in motor vehicles, for coupling a bus subscriber to a bus having a pair of complementary bus lines (H, L), said interface having:
a first driver circuit (1, 10, 11) whose input (In1) is coupled to the bus subscriber and whose output (Out1) is coupled to the first bus line (H) of the pair of complementary bus lines (H, L), and
a second driver circuit (2, 20, 21) which acts in a manner complementary to the first driver circuit (1, 10, 11) and whose output (Out2) is coupled to the second bus line (L) of the pair of complementary bus lines (H, L), **characterized in that** the input (In2) of the second driver circuit (2, 20, 21) is coupled to the output (Out1) of the first driver circuit (1, 10, 11) in such a manner that the input (In2) of the second driver circuit (2, 20, 21) is coupled to the output (Out1) of the first driver circuit (1, 10, 11) via a centre tap point (UM) of a voltage divider (3, 4) which is connected between the two outputs (Out1, Out2) of the two driver circuits (1, 10, 11; 2, 20, 21).

2. Bus interface according to Claim 1, **characterized in that** the second driver circuit (2, 20, 21) is in the form of a regulator which regulates the potential of the centre tap point (UM) of the voltage divider (3, 4) to a predetermined value.

3. Bus interface according to one of the preceding claims, **characterized in that** the second driver circuit (2, 20, 21) has an operational amplifier (2).

4. Bus interface according to one of the preceding claims, **characterized in that** the input (In1) of the first driver circuit (1, 10, 11) receives signals from a motor vehicle communication component.

5. Bus interface according to one of the preceding claims, **characterized in that** the bus is a controller area network bus.

6. Method for coupling a bus subscriber to a bus having a pair of complementary bus lines (H, L), the bus subscriber being coupled to the input (In1) of a first driver circuit (1, 10, 11) and the output (Out1) of the first driver circuit (1, 10, 11) being coupled to the first bus line (H) of the pair of complementary bus lines (H, L), and
the output (Out2) of the second driver circuit (2, 20, 21), which acts in a manner complementary to the first driver circuit (1, 10, 11), being coupled to the second bus line (L) of the pair of complementary bus lines (H, L), **characterized in that** the input (In2) of the second driver circuit (2, 20, 21) is coupled to the output (Out1) of the first driver circuit (1, 10, 11) in such a manner that the input (In2) of the second driver circuit (2, 20, 21) is coupled to the output (Out1) of the first driver circuit (1, 10, 11) via the centre tap point (UM) of a voltage divider (3, 4) which is connected between the two outputs (Out1, Out2) of the two driver circuits (1, 10, 11; 2, 20, 21).

7. Method according to Claim 6, **characterized in that** the second driver circuit (2, 20, 21) acts as a regulator (20, 21) which regulates the potential of the centre tap point (UM) of the voltage divider (3, 4) to a predetermined value.

8. Method according to Claim 6, **characterized in that** the second driver circuit (2, 20, 21) acts as an operational amplifier.

9. Method according to one of Claims 6 to 8, **characterized in that** the input (In1) of the first driver circuit (1, 10, 11) receives signals from a motor vehicle communication component.

10. Method according to one of Claims 6 to 9, **characterized in that** the bus is a controller area network bus.

## Revendications

1. Interface de bus notamment dans des véhicules automobiles, pour coupler à un bus un utilisateur de bus et comprenant une paire de lignes de bus (H, L) complémentaires, et ayant :
- un premier circuit pilote (1, 10, 11) dont l'entrée (In1) est couplée à l'utilisateur de bus et dont la sortie (Out1) est reliée à la première ligne de bus (H) de la paire de lignes de bus (H, L) complémentaires et
- un second circuit pilote (2, 20, 21) fonctionnant de manière complémentaire par rapport au premier circuit pilote (1, 10, 11) et dont la sortie (Out2) est reliée à la seconde ligne de bus (L) de la paire complémentaire de lignes de bus (H, L),
**caractérisée en ce que**
l'entrée (In2) du second circuit pilote (2, 20, 21) est reliée à la sortie (Out1) du premier circuit pilote (1, 10, 11) de façon que l'entrée (In2) du second circuit pilote (2, 20, 21) soit reliée à la sortie (Out1) du premier circuit pilote (1, 10, 11) par un point central (UM) d'un diviseur de tension (3, 4) branché entre les deux sorties (Out1, Out2) des deux circuits pilotes (1, 10, 11 ; 2, 20, 21).

2. Interface de bus selon la revendication 1,
**caractérisée en ce que**
le second circuit pilote (2, 20, 21) est réalisé comme régulateur qui régule le potentiel du point central (UM) du diviseur de tension (3, 4) sur une valeur prédéfinie.

3. Interface de bus selon l'une des revendications précédentes,
**caractérisée en ce que**
le second circuit pilote (2, 20, 21) comporte un amplificateur opérationnel (2).

4. Interface de bus selon l'une des revendications précédentes,
**caractérisée en ce que**
le premier circuit pilote (1, 10, 11) reçoit à l'entrée (In1), les signaux d'un composant de communication du véhicule automobile.

5. Interface de bus selon l'une des revendications précédentes,
**caractérisée en ce que**
le bus est un bus contrôleur de réseau (CAN).

6. Procédé de couplage d'un utilisateur de bus sur un bus comportant une paire de lignes de bus (H, L), complémentaires, selon lequel l'utilisateur de bus est couplé à l'entrée (In1) d'un premier circuit pilote (1, 10, 11) et la sortie (Out1) du premier circuit pilote (1, 10, 11) est reliée à la première ligne de bus (H) de la paire de lignes de bus complémentaires (H, L) et
la sortie (Out2) du premier circuit pilote (1, 10, 11) est couplée de façon complémentaire au second circuit pilote (2, 20, 21) avec la seconde ligne de bus (L) de la paire de lignes de bus complémentaires (H, L),
**caractérisé en ce que**
l'entrée (In2) du second circuit pilote (2, 20, 21) est couplée à la sortie (Out1) du premier circuit pilote (1, 10, 11) de façon que l'entrée (In2) du second circuit pilote (2, 20, 21) soit reliée à la sortie (Out1) du premier circuit pilote (1, 10, 11) par le point central (UM) d'un diviseur de tension (3, 4) branché entre les deux sorties (Out1, Out2) des deux circuits pilotes (1, 10, 11 ; 2, 20, 21).

7. Procédé selon la revendication 6,
**caractérisé en ce que**
le second circuit pilote (2, 20, 21) fonctionne comme régulateur (20, 21) du potentiel du point central (UM) du diviseur de tension (3, 4) sur une valeur prédéfinie.

8. Procédé selon la revendication 6,
**caractérisé en ce que**
le second circuit pilote (2, 20, 21) fonctionne comme amplificateur opérationnel.

9. Procédé selon l'une des revendications 6 à 8,
**caractérisé en ce que**
le premier circuit pilote (1, 10, 11) reçoit à l'entrée (In1), les signaux d'un composant de communication du véhicule.

10. Procédé selon l'une des revendications 6 à 9,
**caractérisé en ce que**
le bus est un bus de contrôleur de réseau (CAN).
